# EUROPEAN PATENT APPLICATION

(11) **EP 2 039 443 A2**
(43) Date of publication of application: **25.03.2009**
(21) Application number: 08016502.0
(22) Date of filing: 18.09.2008
(51) Int. Cl.: B21D 13/02, B21D 17/02, H04M 1/02, B21K 21/16

(54) **Method for working a plate-shaped material into a final product as well as such a final product**

(30) Priority: 18.09.2007 NL 1034399
(71) Applicant: KeyTec International Development Center B.V., 5652 AE Eindhoven (NL)
(72) Inventor: Van Lieshout, Johannes Petrus, 5683 LT Best (NL)
(74) Representative: Valkonet, Rutger

(57) **Abstract**

The invention relates to a method for working a plate-shaped material into a final product, comprising the steps of:
i) feeding a rectangular baseplate to a deforming tool;
ii) working the rectangular baseplate in said deforming tool;
iii) removing the worked baseplate.

The object of the invention is to overcome the above drawbacks and to provide a method as referred to in the introduction for manufacturing a baseplate having a greater stiffness and a reduced depth or height dimension. In accordance with the method according to the invention, step ii) to that end comprises the substep ii-1) of upsetting the baseplate by exerting an upsetting force on at least one circumferential edge of the baseplate.

This makes it possible to realise a baseplate having a significantly improved stiffness and strength whilst retaining limited constructional dimensions. As a result, such a baseplate can be used as a backplate for a portable device as described above, which backplate will be capable of accommodating a display screen with a sufficient degree of stiffness or strength, also in the case or large dimensions, whilst in addition this will not lead to unnecessarily large dimensions of the device in question.

## Description

The invention relates to a method for working a plate-shaped material into a final product, comprising the steps of:
i) feeding a rectangular baseplate to a deforming tool;
ii) working the rectangular baseplate in said deforming tool;
iii) removing the worked baseplate.

The method is in particular suitable for working all kinds of baseplate materials. A first application relates to portable devices. In many portable devices, such as mobile telephones and the like, the device's display screen (LCD screen) is retained or clamped in place in a so-called backplate. Such a backplate is usually made of a metal whose circumferential edges are flanged, between which flanged edges the display screen can be clampingly or non-clampingly accommodated.

In principle the backplate imparts a certain stiffness and strength to the support of the display screen, and thus to the device. Furthermore, such a backplate functions to shield the display screen from the electronics that are also present in such an device. It has been found, however, that the strength of the current backplates significantly decreases in particular when larger dimensions are used, making it necessary to overdimension the backplate. This, in turn, leads to increased dimensions of the device in question.

The object of the invention is to overcome the above drawbacks and to provide a method as referred to in the introduction for manufacturing a baseplate having a greater stiffness and a reduced depth or height dimension. In accordance with the method according to the invention, step ii) to that end comprises the sub-step ii-1) of upsetting the baseplate by exerting an upsetting force on at least one circumferential edge of the baseplate.

This makes it possible to realise a baseplate having a significantly improved stiffness and strength whilst retaining limited constructional dimensions. As a result, such a baseplate can be used as a backplate for a portable device as described above, which backplate will be capable of accommodating a display screen with a sufficient degree of stiffness or strength, also in the case or large dimensions, whilst in addition this will not lead to unnecessarily large dimensions of the device in question.

More in particular, the method according to the invention is further characterised in that step ii) is preceded by the sub-step iv) of forming one or more grooves in the baseplate, parallel to the circumferential edges thereof. This makes it easier to control the upsetting operation as carried out in step ii), because the upsetting of the material of the circumferential edge will take place at the location of the grooves formed in the baseplate. The fact is that the grooves form a weakened portion of the material, which will deform under the influence of an upsetting force at the location of the grooves.

More specifically, according to another embodiment of the method according to the invention, sub-step iv) is carried out prior to step i).

According to an improved embodiment of the method according to the invention, step ii-1) is preceded by the sub-step ii-2) of forming the circumferential edge of the baseplate into an upright circumferential edge by means of a deforming operation. This method step is functional in particular in the case of applications in which parts of the baseplate must be bent over so as to form a framework, for example in order to provide a backplate for use in portable devices as described above.

In another functional application of the method according to the invention, step ii-1) is preceded by the sub-step ii-3) of forming the baseplate into a cylinder barrel having circular circumferential edges by means of a deep drawing operation. This makes it possible to form cylinder barrels of sufficient stiffness or strength. Such a cylinder barrel can be used as a hose coupling, for example.

In another embodiment, the method is characterised in that step ii-1) is followed by the sub-step ii-4) of upsetting the circumferential edge by exerting an upsetting force on the other circular circumferential edge of the cylinder barrel.

The invention also relates to a backplate functioning to support a display screen, for example for use in a portable device, which is built up of a rectangular, metal baseplate having flanged circumferential edges.

Analogously to the foregoing, the known backplate has a limited degree of stiffness or strength, which stiffness or strength can only be ensured by overdimensioning the backplate in question. This in turn leads to a device having unnecessarily increased constructional dimensions.

According to the invention, the circumferential edges of the backplate are configured as circumferential edges that have been deformed into a corrugated configuration. In this first place, this results in a stronger design, which prevents deflection of the backplate under the influence of loads being exerted thereon. In addition, the backplate can be designed to have a reduced height, which makes it possible to develop so-called "flatter" devices.

More in particular, said deformation of the circumferential edges into a corrugated configuration has been effected by means of an upsetting operation.

According to another embodiment of the backplate according to the invention one or more grooves are formed in the backplate, parallel to the circumferential edges, so as to enable deformation thereof. As a result, the deformation of the circumferential edges can take place in a reproducible and controlled manner.

The invention also relates to a cylinder barrel for a hose coupling made up of a cylindrical metal baseplate, wherein according to the invention the circumferential edges are configured as circumferential edges that have been deformed into a corrugated configuration.

The invention will now be explained in more detail with reference to a drawing, in which:
Figure 1A is a partial view of a backplate according to the prior art;
Figure 1B is a detail view of an aspect of a backplate according to the invention;
Figures 2A-2C are views of aspects of the method according to the invention;
Figures 3A-3B are detail views of another aspect of the method according to the invention;
Figures 4A-4D show further aspects of the method according to the invention;
Figure 5 is a partial view of a cylinder barrel formed by using the method according to the invention.

For a better understanding of the invention, like parts will be indicated by the same numerals in the description of the figures below.

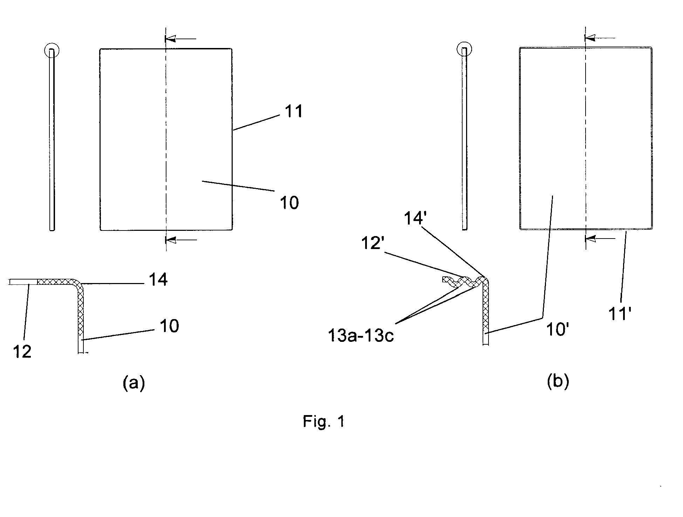

Figure 1A shows an embodiment of a backplate 10 according to the invention. The backplate 10 is usually made of a metal and has a circumferential edge 11. According to the prior art, said circumferential edge 11 has been formed into an upright circumferential edge 12, with numeral 14 forming the bend line between the flat central part of the backplate 10 and the upright circumferential edge 12.

With the known backplate 10 according to the prior art, the circular circumferential edges 11 have been formed into an upright circumferential edge 12, between which circumferential edges a display screen (LCD screen) can be fitted. The external dimensions of such a display screen correspond to the internal dimensions of the upright circumferential edges 12. Such a backplate provides a functional clamping engagement or retainment of the display screen and, in addition, a certain protection of this vulnerable component. Such a backplate 10 in particular functions to provide stiffness or strength, being capable of absorbing any stresses or loads and prevent them from being transmitted to the vulnerable LCD screen.

Figure 1B shows an aspect of a backplate 10' according to the invention. In this embodiment, the circumferential edge 11' has likewise been formed into an upright circumferential edge 12', which is bent over along the bend line 14'. To increase the stiffness or strength of the backplate 10', the circumferential edge 12' has been deformed in such a manner that the circumferential edge has a corrugated configuration.

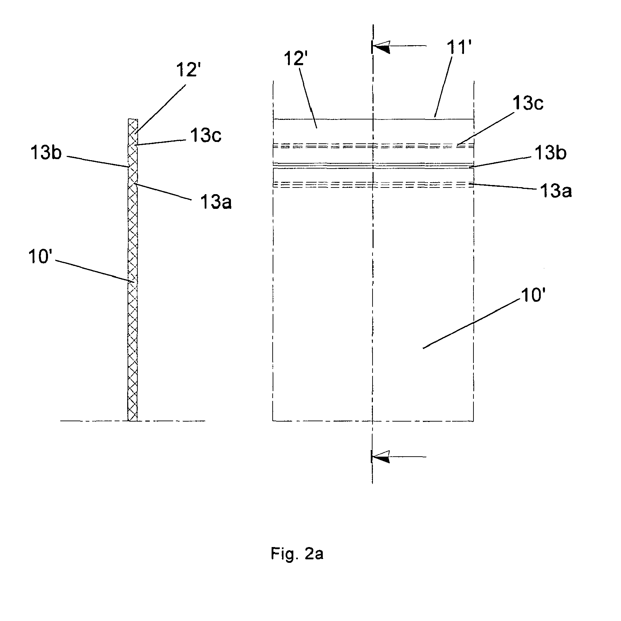

Figures 2A-2C show a number of stages of the method steps for obtaining a backplate 10' according to the invention. In order to make it possible to deform or upset the circumferential edge 11' into a corrugated circumferential edge 12' (seen figure 1B), a number of grooves 13a-13c have been formed in the material, which grooves extend parallel to the circumferential edge 11'.

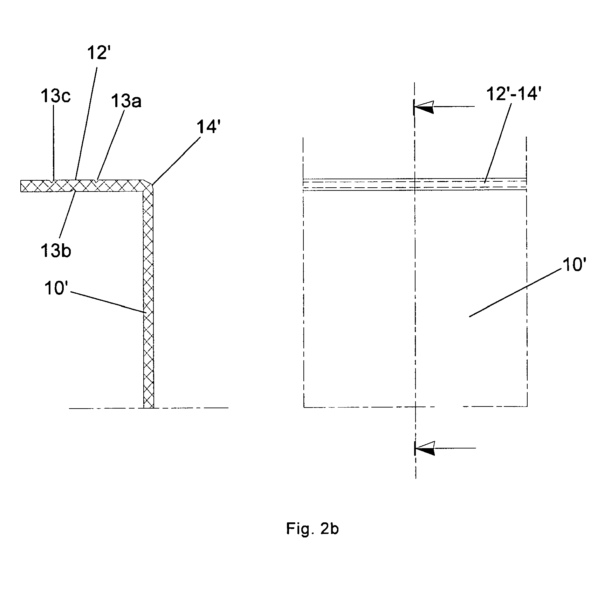

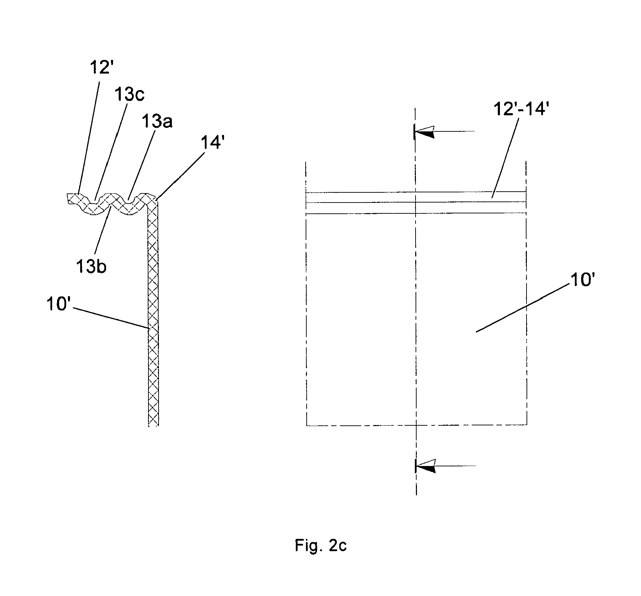

Thus an upright edge 12' is formed upon bending over the circumferential edge 11' along the bend line 14', as is shown in figure 2B. In a further step of the method according to the invention, the upright circumferential edge 12' is deformed by means of an upsetting operation, with the material of the upright circumferential edge 12' being deformed at the location of the grooves 13a-13b to obtain the corrugated pattern shown in figure 2C.

The backplate 10' thus formed, which comprises a circumferential edge 12' deformed by means of an upsetting operation, imparts additional stiffness and strength to the backplate 10', making it possible to design the backplate to have larger dimensions on the one hand and a reduced height on the other hand, and thus to develop and construct "flat" devices provided with a display screen (for example a mobile telephone, a PDA or an MP3 player).

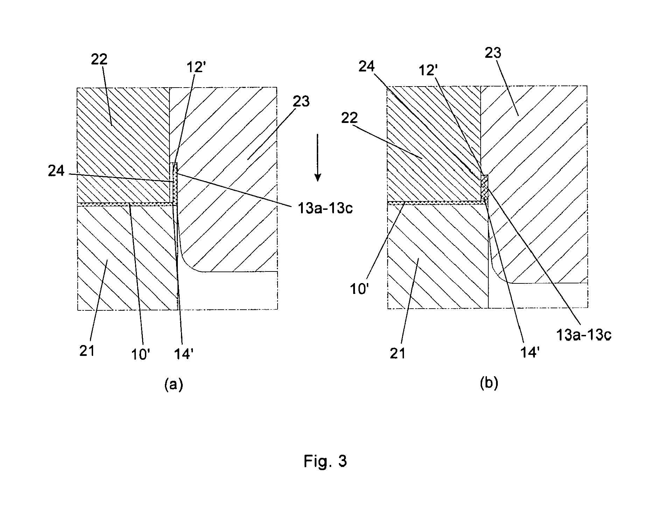

Figures 3A and 3B show a punching tool, which can be used in forming a backplate 10' according to the invention by means of an upsetting operation. The backplate 10' provided with a straight, folded-over edge is clampingly accommodated between a lower die section 21 and an upper die section 22. The upright circumferential edge 12' is accommodated in a recess 24 that forms part of a punch element 23 which is movable along the upper die section 22 relative to the lower die section 21. Since the width of the recess 24 between the punching tool 23 and the upper die section 22 is greater than the thickness of the upright circumferential edge 12', the circumferential edge 12' can deform as a result of the upsetting operation, as is shown in figure 3B. The upright circumferential edge 12' will deform at the location where the grooves 13a-13c are present in the material so as to thus realise a controlled but above all reproducible deformation for obtaining a circumferential edge 12' having a corrugated configuration.

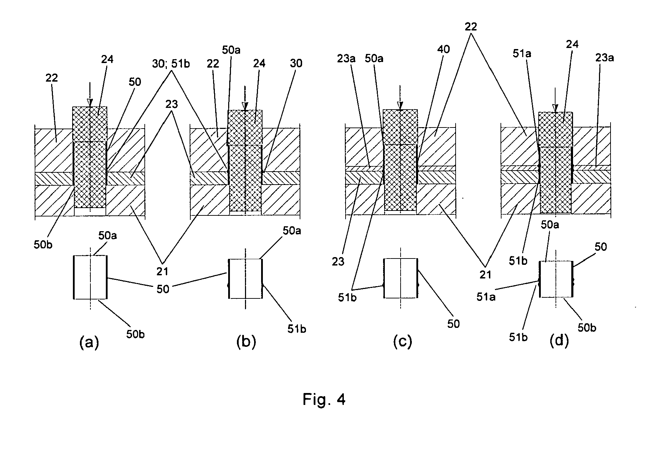

Figures 4A-4D show the sub-steps of an alternative method according to the invention.

The figures show a punching tool which can be used in working a cylindrical baseplate 50 by means of an upsetting operation so as to obtain a cylinder barrel according to the invention. The cylindrical baseplate 50 is accommodated in a lower die section 21 and an upper die section 22, whilst a so-called upsetting die section 23 is provided between the lower die section and the upper die section. A small, circular recess is present between the upsetting die section and the upper die section 22, which recess has been obtained by slightly flattening one circumferential edge, or both circumferential edges, of the upsetting die section 21 and/or the upper die section 22. Said circular recess is indicated at 30 in figures 4A-4D.

According to the invention, a deforming operation is carried out on the cylindrical baseplate 50 by means of the head mandrel 24, which exerts an upsetting force (see the direction indicated by the arrow) on the first circumferential edge 50A of the cylindrical baseplate 50. Thus, in the sub-step shown in figure 4A a first corrugated circumferential edge 51B is formed in that the material of the cylindrical baseplate 50 is locally upset in the circular recess 30 formed by the upsetting die section 23 and the upper die section 22.

The mandrel 24 extends fully into the cylinder barrel 50, thus preventing the material from being upset inwardly under the influence of the upsetting force and forming the corrugated circumferential edge 51 B.

As figure 4C shows, in a subsequent step of this embodiment of the method according to the invention, a second upsetting die section 23A is placed on top of the first upsetting die section 23 and under the upper mould section 22. In a second working step (deforming step), a second upsetting force is exerted on the circumferential edge 50A by means of the head mandrel 24, as a result of which a second corrugated circumferential edge 51 is formed by locally upsetting the material in the circular recess 40 formed by the second upsetting die section 23A and the upper die section 22.

The mandrel extends fully into the cylinder barrel 50, so that the material is prevented from being upset inwardly by the upsetting force. The material is thus forced to take the shape of a circular backing-up strip 51A and 51 B in the circular recesses 40 and 30, respectively, formed by the upper die section 22 and the second upsetting die section 23A and the first upsetting die section 23, respectively.

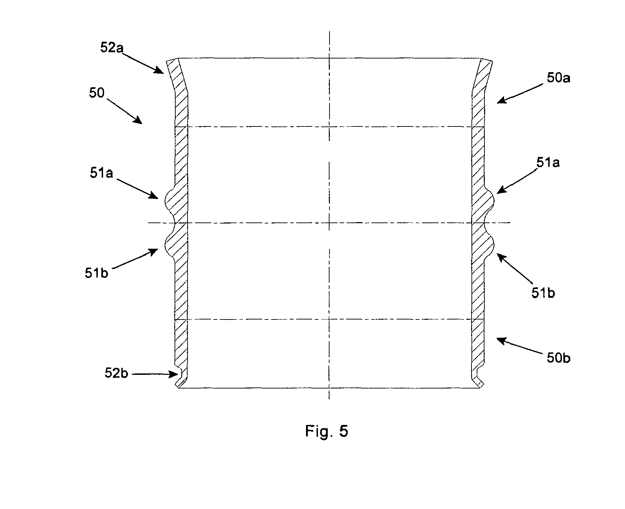

Figure 5 shows the cylinder barrel 50 in more detail, in which connection it is furthermore noted that the circumferential edges 50A and 50B may be additionally deformed, as indicated by numerals 52A and 52B, respectively. A cylinder barrel 50 as shown in figure 5 is in particular suitable for use as a hose coupling.

The method according to the invention has the advantage that the stresses that may be set up in the material, and in particular in the cylinder barrel, as a result of the material being worked are distributed over the circumference thereof rather than being concentrated in points, as is the case with the cylinder barrels that have been used so far (which are formed by means of bending rolls). In addition, the barrel has a better roundness, because the stresses are distributed over the circumference thereof.

The material usage as well as the treatments for the parts of the upsetting tool are a story in themselves. The materials that come into contact with the region where upsetting is actually going to take place comprise a powder metallurgical material and have furthermore been subjected to a thermal treatment and been coated. As a result, a final product is realised which not only has sufficient stiffness and strength but also a sufficiently long life.

The circular backing-up strips or corrugations 51A-51B being formed on the sleeve function to impart a certain degree of stability to the sleeve and to assist in positioning a hand tool for compressing the outer sleeve. Said compressing of the outer sleeve is necessary in order to clamp down a hose being inserted therein.

## Claims

1. A method for working a plate-shaped material into a final product, comprising the steps of:
i) feeding a rectangular baseplate to a deforming tool;
ii) working the rectangular baseplate in said deforming tool;
iii) removing the worked baseplate, **characterised in that** step ii) comprises the sub-step
ii-1) of upsetting the baseplate by exerting an upsetting force on at least one circumferential edge of the baseplate.

2. A method according to claim 1, **characterised in that** step ii) is preceded by the sub-step
iv) of forming one or more grooves in the baseplate, parallel to the circumferential edges thereof.

3. A method according to claim 2, **characterised in that** sub-step iv) is carried out prior to sub-step i).

4. A method according to any one or more of claims 1-3, **characterised in that** step ii-1) is preceded by the sub-step
ii-2) of forming the circumferential edge of the baseplate into an upright circumferential edges by means of a deforming operation.

5. A method according to any one or more of claims 1-3, **characterised in that** step ii-1) is preceded by the sub-step
ii-2) of forming the baseplate into a cylinder barrel having circular circumferential edges by means of a deep drawing operation.

6. A method according to claim 5, **characterised in that** step ii-1) is followed by the sub-step
ii-4) of upsetting the circumferential edge by exerting an upsetting force on the other circular circumferential edge of the cylinder barrel.

7. A backplate functioning to support a display screen, for example for use in a portable device, which is built up of a rectangular, metal baseplate having flanged circumferential edges, **characterised in that** said circumferential edges are configured as circumferential edges that have been deformed into a corrugated configuration.

8. A backplate according to claim 7, **characterised in that** said deformation of the circumferential edges into a corrugated configuration has been effected by means of an upsetting operation.

9. A backplate according to claim 7 or 8, **characterised in that** one or more grooves are formed in the backplate, parallel to the circumferential edges.

10. A cylinder barrel for a hose coupling built up of a cylindrical, metal baseplate, **characterised in that** the circumferential edges are configured as circumferential edges that have been deformed into a corrugated configuration.

11. A cylinder barrel for a hose coupling according to claim 10, **characterised in that** said deformation of the circumferential edges into a corrugated configuration has been effected by means of an upsetting operation.

12. A cylinder barrel for a hose coupling according to claim 10 or 11, **characterised in that** one or more grooves are formed in the cylinder barrel, parallel to the circumferential edges.
